# EUROPEAN PATENT APPLICATION

(11) **EP 4 187 035 A1**
(43) Date of publication of application: **31.05.2023**
(21) Application number: 21211169.4
(22) Date of filing: 29.11.2021
(51) Int. Cl.: E04C 1/42

(54) **TRANSLUCENT GLASS BRICK**

(71) Applicant: EMPA Eidgenössische Materialprüfungs- und Forschungsanstalt, 8600 Dübendorf (CH)
(72) Inventor: Ganobjak, Michal, 8600 Dübendorf (CH); Wernery, Jannis, 8600 Dübendorf (CH); Koebel, Matthias, 8600 Dübendorf (CH)
(74) Representative: Prins Intellectual Property AG

(57) **Abstract**

A translucent insulating glass brick (1) is described, having two short sides (12), two long sides (13) an upper side (14) and a lower side (15), said glass brick comprising at least two glass panes (2, 2') forming the long sides (13) of the glass brick (1), with at least one spacer fixed at inner sides for spacing two adjacent glass panes (2, 2') towards each other and creating at least one cavity (10) in the interspace between the glass panes (2, 2'), in which the at least one spacer is fixed, wherein the cavity (10) is filled with a translucent insulating aerogel material (4) between the glass panes, should show improved thermal isolation and stabilisation. This is reached in that, the at least one spacer is an inhibiting spacer (6) from a transparent or translucent material, comprising a wall in a zig-zag shape or with a shape, comprising at least one base rod or plate or a multiplicity of rods and plates, which can point in different directions from a base length axis, which is placed in the internal space of the cavity (10) between the glass panes reducing thermal transfer, and that the periphery of the glass brick (1) is sealed with a sealing layer (11).

## Description

### TECHNICAL FIELD

The invention pertains to a translucent insulating glass brick comprising glass panes connected with spacers and filled with aerogel material.

### STATE OF THE ART

Glass bricks made by joining together two glass U-shells are available on the market in various shapes and forms.

In EP0678141A1 composite building elements are described with at least two glass panes and plastic spacers between the glass panes to reduce thermal bridging. The spacers are opaque PVC spacers.

And FR2711167 describes elements for constructing transparent or non-transparent insulating walls and method for manufacturing such elements using plastic sheets in the brick between two glass shells. In these patents the transparent bricks allow direct sunlight to enter and the heat bridge is high. These solutions cannot be used for highly insulating glass bricks.

Other patents describe the use of aerogel filled between the glass panes to significantly reduce the heat bridge and for better thermal insulation and simultaneously create loadbearing element.

CN102606040 describes hollow glass with aerogel filled between two pieces of glass. The glass is structurally characterized in that the aerogel is filled in a hollow portion between the two pieces of glass, the two pieces of glass are lined by a spacing frame and sealed by butyl rubber and sealant.

CN108060874 describes a composite aerogel glass which includes a first glass plate, a second glass plate, a package piece, and an aerogel assembly. The inner surface of the first glass plate and/or the second glass plate is provided with a low-radiation film.

US2011195206A1 describes a translucent insulated glass panel including first and second glass plates separated from one another by a spacer. Together with the spacer, the first and second glass plates form a closed cavity. The closed cavity is filled with a translucent insulating material, preferably an aerogel material.

The currently available glass panels with perimeter sealing and aerogel filling require framing and are not loadbearing. Panel also refers to object with planar characteristics. Thus, a convincing solution for translucent, highly isolating, loadbearing glass bricks has not yet been provided.

### DESCRIPTION OF THE INVENTION

The subject of the invention is to provide glass bricks which are weather resistant, highly thermally insulating, loadbearing, translucent and user-friendly, and which can be used for large scale areas applications.

This subject is solved by a translucent isolating glass brick and a glass wall according to the claims.

The translucent insulating glass brick of the present invention has two short sides, two long sides, an upper side and a lower side, said glass brick comprising at least two glass panes forming the long sides of the glass brick. Sealing spacers and/or inhibiting spacers are used for spacing and/or thermally insulating two adjacent glass panes towards each other and for creating cavities in the interspace between two adjacent glass panes. A translucent insulating aerogel material is filled in the cavities between the glass panes.

The inhibiting spacers can have a zig-zag shape and are placed in the internal space of the cavities between the glass panes to reduce thermal transfer. At least the cross section of inhibiting spacers should show the zig-zag shape. The inhibiting spacers comprising a wall in a zig-zag shape, with at least one turn between beginning and end.

The term zig-zag shape means a wall with one or a series of short sharp turns, angles, or alterations in its course, and also includes z-like shape, s-like shape, or spring shape of the wall. Preferably, the zig-zag shape of the inhibiting spacer is made of a wall with at least three turns, angles or alterations, between beginning and end of this wall. In the here shown embodiment, the zig-zag shape of the inhibiting spacer is made of eight turns, angles or alterations.

Experiments showed, that appropriate inhibiting spacers should essentially comprise a base rod or plate with multiple arms or walls projecting therefrom perpendicular to a base length axis to extend path of heat flux.

The sealing spacers are preferably U-shaped or C-shaped, preferably with a flat base, and are placed predominantly at the outer perimeter of the glass panes at the short sides of the glass brick improving structural stability of the brick. The flat base of the U-shaped or C-shaped sealing spacer is preferably positioned in the direction of the short side of the brick. The U-shaped or C-shaped sealing spacers give stability and robustness to the short side of the glass brick. The term U-shaped or C-shaped according to the present invention means that the sealing spacer has essentially two parallel side walls, a third wall being an arch, preferably a circle arch, with the arch directed to the inside and to the fourth wall of the spacer, and the fourth flat wall defined as the flat base. The sealing spacer can also be I-shaped, comprising a base wall with with thickenings at both edges. The sealing spacer can be located at the edges or in the interior of a cavity, more preferably at the edges.

All spacers are preferably made of plastic material, preferably of polycarbonate, acrylic or epoxy resin or generally polymer resin. Such spacers should be at least translucent, most preferred are transparent. The spacers can also be opaque or made of an opaque material.

In a preferred embodiment, at least two, preferably three inhibiting spacers are used and are placed at a regular spacing in the internal space of the cavities between the glass panes. The shape of the inhibiting spacers makes the path of thermal flux longer and thus has the best effect on inhibiting thermal flux through the brick and to hinder heat loss.

In a preferred embodiment, the glass brick comprises at least three glass panes with two outer glass panes forming the long sides of the brick and at least one inner glass pane located parallel between the two outer glass panes.

In a more preferred embodiment of the invention, the translucent insulating glass brick comprises four glass panes with a first and a second outer glass pane and a first and a second inner glass pane, wherein the sealing spacers are placed between the first outer glass pane and the first inner glass plane forming a first cavity and between the second outer glass pane and the second inner glass pane forming a second cavity, and wherein the inhibiting spacers are placed between the two inner glass panes forming a third cavity.

The glass panes are made from transparent glass, milky, color-tinted or sanded glass, are up to 100 cm long and up to 25 cm wide and have a thickness of 10 to 20 mm, preferably of 10 to 15 mm.

The glass panes can comprise a laminated layer or metal mesh for security, structural integrity reasons or other reasons. The outer surface can be made of surface structured/patterned glass. The laminated layer can have a printed pattern. The solid outer glass panes can have chamfered edges. It is also possible that a layer defined as glass pane can comprise two glass panes laminated together with a laminate between.

The glass bricks preferably have dimensions of up to 100 cm in lengths, up to 30 cm in width and up to 25 cm in thickness. The U-value or thermal transmittance which is the rate of transfer of heat through the glass brick is less than 0.4 W/(m²·K).

The upper and lower side of the glass panes of the glass brick can be sealed with a sealing layer forming a closed cavity between the glass panes. In a preferred embodiment, the short sides between two glass panes without sealing spacers and the upper and lower sides between the glass panes are sealed with a sealing layer forming completely closed cavities between the glass panes. Preferably, the glass brick is completely sealed with a sealing layer to completely enclose the translucent insulating aerogel material between the glass panes. Such aerogel material is characterized by translucency and thermal insulation.

The sealing layer preferably is a foil or plate which is glued or poured on the periphery of the glass brick or on the short side, the upper side and the lower side of the brick or is glued or poured between the glass panes without sealing spacers. The sealing further minimizes the thermal bridging of the glass brick.

The translucent insulating aerogel material preferably comprises aerogel granules. In a more preferred embodiment, the aerogel translucent insulating material is silica aerogel powder with high transparency. Silica aerogel improves thermal conductivity of the brick and the granular filling creates diffusive light effect. Thus the glass brick of the present invention has improved thermal insulating properties, daylight transmission and diffusive light effect. The aerogel filled translucent glass brick of the invention allows daylight scattered by light diffusion more deeply into the interior of a building than direct daylight, and thus helps with eliminating dark internal surfaces and shadows.

Translucent material allows transmission of an incident visible light beam, wavelengths between 380nm and 700nm, of at least 3%, more preferred at least 5 %, wherein translucent transmitted light appears more diffused, than transmitted light through transparent material and does not allow clear visual contact. The transmission can be measured with commercially available instruments.

In another embodiment of the invention, the glass panes have pre-drilled blind holes within which the sealing spacers and the inhibiting spacers are anchored with an anchor into the glass. Preferably, the blind holes have a depth which is half of the width of the glass pane. The anchor helps to increase the strength of the connection between the spacers and the glass panes. The anchor of the first and inhibiting spacers are preferably plastic anchors and secure more structural stability of the brick.

In a further aspect the present invention provides a glass wall comprising the glass bricks according to the invention, wherein the glass bricks are connected with mortar or glue and said glass wall is reinforced with at least one vertical reinforcing element, preferably with metallic rods or ropes. The vertical reinforcing elements can be fixed in the ground and/or ceiling of the structure of a building. In this scenario, the brick is not carrying the load of the ceiling, only of the wall itself. The reinforcing elements preferably go through the glass bricks inside of the brick or sides of the brick. Preferably, mortar or glue to connect the bricks together are transparent.

Preferably, the mortar or glue is used in stripes to avoid humidity bridge and spread internal forces. By mortar is understood paste-like adhesive consisting of filler and binder/glue part, usually with sand.

The compressive strength of the glass brick of the present invention preferably is between 5 MPa and 50 MPa, more preferably about 45 MPa. This means that the compressive strength of the glass brick is four to seven times higher than the compressive strengths of conventional insulation clay construction blocks.

The glass brick of the present invention allows preferably a border-to-border horizontal frameless construction of highly insulated translucent walls with loadbearing function. The glass bricks can be used for the construction of endless glass walls without frame or without loadbearing construction for the brick. The glass bricks have glazed internal and external finishing surfaces which are weather resistant, user-friendly and can carry their own load and additional loads. The glass brick can bear itself, fulfills thermal insulating standards and has an aesthetic diffusive effect. Thus, the preferred small size of the glass bricks allows them to be handled easily and allow to build long and high large scale perimeter walls without dividing elements in between. The glass walls using the glass brick of the invention can serve as a substitution of conventional perimeter walls of a building which are made of conventional bricks or concrete, without necessity of additional finishing layers.

The glass brick is suitable as a solution for representative buildings with generous foyers, patios or glazed walls, and/or in positions, which do not require visual contact with exterior but benefit from diffuse light. Diffusive light is appropriate for libraries, art workshops, galleries, museums, foyers and everywhere, where it is necessary to eliminate dark areas, secure proper illumination, while eliminating direct sunlight glare. It is suitable for large-scale spaces, where it is necessary to bring proper illumination inside like gym halls, libraries, schools, hospitals, sanatoriums. Translucent bricks are appropriate for solutions to harvest/utilize heat from sunlight provided by infrared radiation which can pass through the translucent glass brick as for example enclosed tropical gardens, greenhouses, patios. Furthermore, it will allow for an aesthetic appearance of the building from outside in the night-time, when the inside is illuminated it creates a warm lighting of the wall - while still keeping users privacy. Thanks to the light-diffusive effect of the aerogel, is possible to use light projection techniques on the aerogel glass brick and/or incorporate LED lights to create interesting architectural effects on the wall in the nighttime.

The present invention also provides further combinations of the elements, for example more than four glass panes or additional spacers at different places between the glass panes.

### BRIEF DESCRIPTION OF THE DRAWINGS

In the following, the invention is described in greater detail, by way of example, with reference to the accompanying drawings. It shows
- Fig. 1a: a glass brick in perspective view from above, while
- Fig. 1b: shows a top view on the upper side of another simplified embodiment of a glass brick,
- Fig. 2a: a top view on the upper side of a glass brick,
- Fig. 2b: a side view on the short side of the glass brick of Fig. 2a,
- Fig. 3a: a top view on the upper side of another glass brick,
- Fig. 3b: a side view on the short side of the glass brick of Fig. 3a,
- Fig. 3c: a side view on the long side of the glass brick of Fig. 3a,
- Fig. 4a: a cross section through a sealing spacer with U-shape and
- Fig. 4b: shows a perspective view of the associated sealing spacer, while
- Fig. 4c to 4g: are showing cross section views through different embodiments of the inhibiting spacer,
- Fig. 5: a front view on a glass wall, and
- Fig. 6: a glass wall made of glass bricks in a perspective view, while the glass wall is used as a substitution of a perimeter wall.

### DETAILED DESCRIPTION

In the figures, the same reference numbers are used for the same elements.

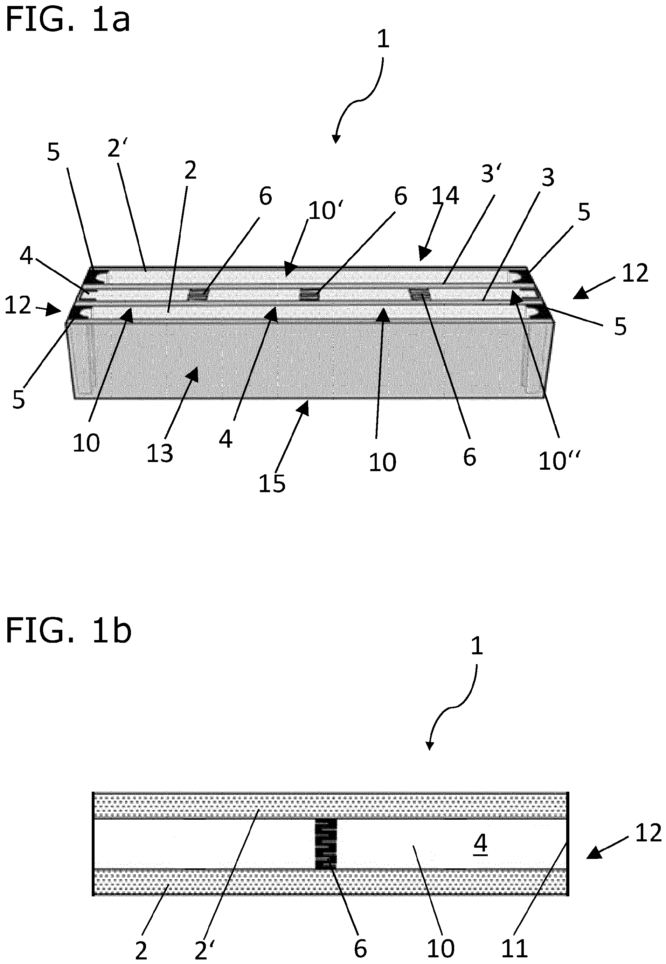

Figure 1a shows a glass brick 1 in a perspective view on the upper side and long side of the glass brick 1. The glass brick 1 has two short sides 12, two long sides 13 (only one shown in the front) an upper side 14 and a lower side 15. The glass brick 1 has four glass panes with a first 2 and a second 2' outer glass pane forming the long sides 13 of the glass brick 1 and a first 3 and a second 3' inner glass pane located parallel between the two outer glass panes 2, 2'. Four U-shaped sealing spacers 5 are shown with the flat outer face towards the short side of the brick. Two of the sealing spacers 5 are placed between the first outer glass pane 2 and the first inner glass plane 3 forming a first cavity 10 and two are placed between the second outer glass pane 2' and the second inner glass pane 3' forming a second cavity 10'. Three zig-zag shaped inhibiting spacers 6 are placed between the two inner glass panes 3, 3' forming a third cavity 10". A translucent insulating aerogel material 4 filled in the cavities 10, 10' and 10" between the glass panes. Preferably a silica aerogel is used in all glass bricks 1.

The short side 12 without sealing spacers, the upper side 14 and lower side 15 of the glass brick are sealed between the glass panes with a sealing layer 11 forming completely closed cavities between the glass panes. The sealing layer 11 can be formed by a plastic film, a plastic film with amount of reinfocing fibers or a polycarbonate or glass layer.

In Figure 1b a more simplified glass brick 1, comprising two outer glass panes 2, 2', divided by one inhibiting spacer 6, using the sealing layer 11 for forming a closed cavity 10 is shown. The inhibiting spacer 6 has the thermal flux inhibiting function and a stabilizing function here. Of course here the cavity 10 is filled with translucent or transparent thermally insulating aerogel material.

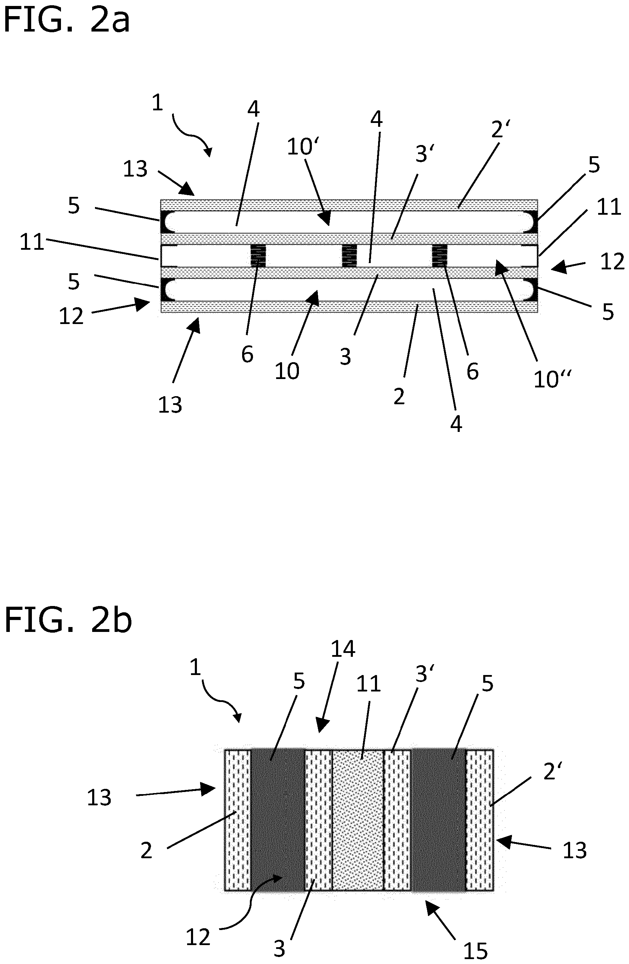

In figure 2a the glass brick 1 of figure 1a is shown from the top onto the upper side of the glass brick 1 with a first 2 and a second 2' outer glass pane forming the long sides 13 of the glass brick 1 and a first 3 and a second 3' inner glass pane located parallel between the two outer glass panes 2, 2'. Four U-shaped sealing spacers 5 are shown with the flat outer face towards the short side of the brick forming a first cavity 10 and a second cavity 10'. Three zig-zag shaped inhibiting spacers 6 are placed between the two inner glass panes 3, 3' forming a third cavity 10". The short side 12 of the glass brick 1 is sealed between the two inner glass panes 3, 3' with a sealing layer 11. One of the inhibiting spacers 6 is placed in the middle of the long side of the two inner glass panes 3, 3'. The other two inhibiting spacers are placed at the same distance from the middle inhibiting spacer and are placed between the middle spacer and the sealing layer 11.

Figure 2b shows a side view on the short side 12 of the glass brick 1 as shown in figure 2a with an upper side 14 and a lower side 15, and with a first 2 and a second 2' outer glass pane forming the long sides 13 of the glass brick 1 and a first 3 and a second 3' inner glass pane located parallel between the two outer glass panes 2, 2'. The sealing spacers 5 are located between the outer glass panes 2, 2' and the inner glass panes 3, 3'. The space between the two inner glass panes 3, 3' is sealed with a sealing layer 11.

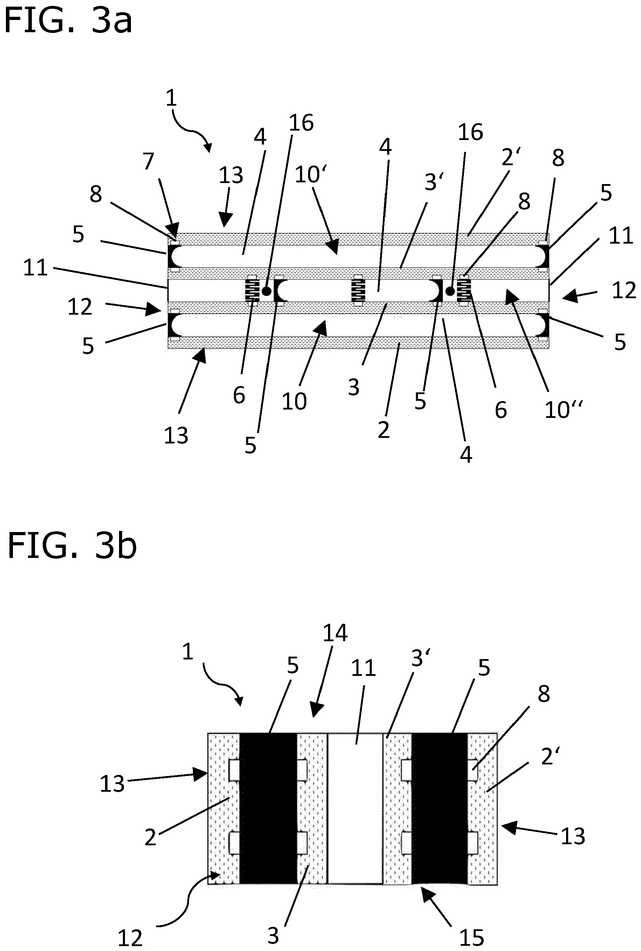

In figure 3a the glass brick 1 as described in figure 2a is shown with additional anchors 8 to anchor each first and inhibiting spacer with two anchors into blind holes of the glass panes.

In addition, reinforcing elements 16, preferably metallic rods, are shown to reinforce glass walls made of glass bricks. The reinforcing elements 16 go through the glass brick and can be placed at the centre line between the outer glass panes.

Figure 3b shows a side view on the short side 12 of the glass brick 1 as shown in figure 3a with an upper side 14 and a lower side 15, and with a first 2 and a second 2' outer glass pane forming the long sides 13 of the glass brick 1 and a first 3 and a second 3' inner glass pane located parallel between the two outer glass panes 2, 2'. The sealing spacers 5 are located between the outer glass panes 2, 2' and the inner glass panes 3, 3' and contain two anchors 8 on each side of the sealing spacers 5. The space between the two inner glass panes 3, 3' is sealed with a sealing layer 11.

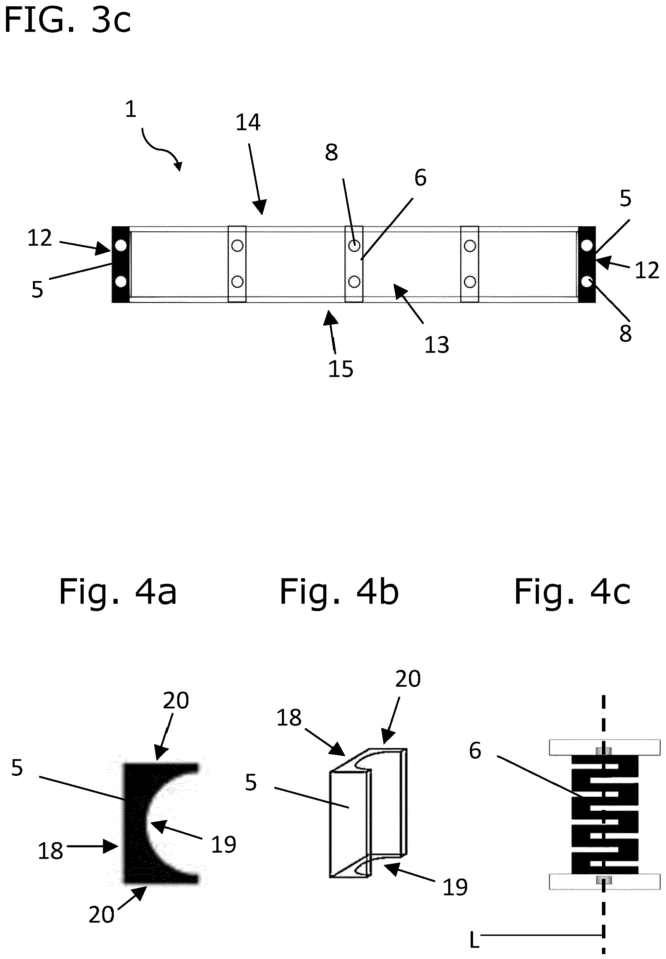

Figure 3c shows a front view on the long side of the glass brick 1 of Fig. 3a through an outer glass pane. The sealing spacers 5 with anchors 8 are shown as well as three inhibiting spacers 6 with two anchors 8 each.

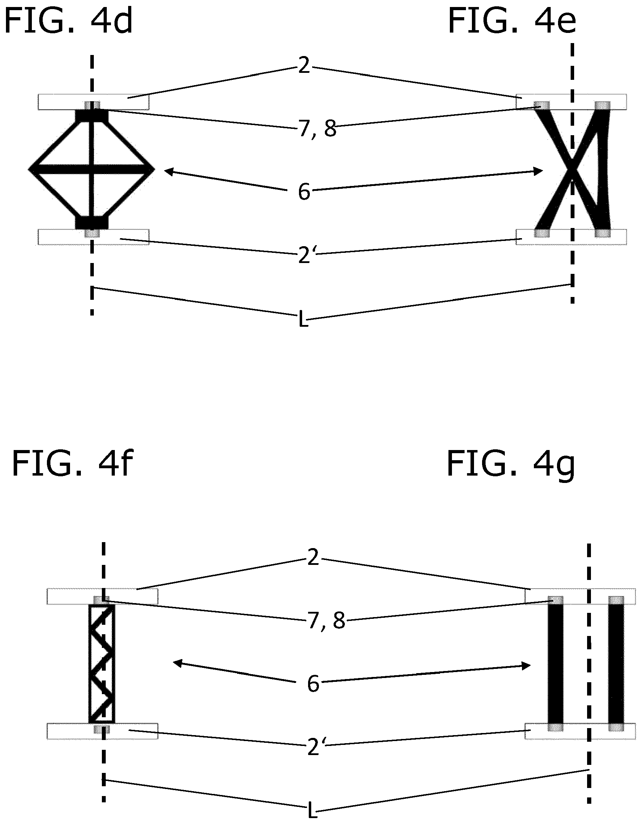

In Figure 4a a cross section of the sealing spacer 5 is shown having an U-shaped form and a flat base 18, two parallel side walls 20, a third wall being an arch curved to the inside and to the flat base 18 of the spacer, and a fourth flat wall defined as the flat base 18. The sealing spacer is preferably transparent and is made of polycarbonate, acrylic or epoxy resin or generally polymer resin.

Figure 4b shows a perspective view of the sealing spacer 5 of figure 4a with an U-shaped form and a flat base 18.

In contrast to the sealing spacer 5 of figure 4b, the sealing spacer 5 can also be I-shaped, comprising a base wall with thickenings at both edges.

Figure 4c shows a cross section of the inhibiting spacer having a zig-zag shape with eight curves, which is here made of transparent epoxy resin. The curves of the zig-zag shape snake around the base length axis L of the inhibiting spacer 6.

Figures 4d and 4e are showing other embodiments of the inhibiting spacer 6, fixed by blind holes 7 and anchors 8, between two panes 2, 2'. Experiments showed, that appropriate inhibiting spacers 6 can be opaque, translucent or transparent, made of a plastic material and should essentially comprise at least one base rod or plate or a multiplicity of rods and plates, pointing in different directions relative to the base length axis L of the inhibiting spacer 6. In other embodiments starting from the at least one rod or plate, multiple arms or walls can project in different directions. The technical effect is to extend the path of heat flux therefrom from the base length axis L, most preferred perpendicular from the base length axis L. The direction of the projection can differ at least to a fraction parallel to the long sides 13 of panes 2, 2'. The not shown aerogel is surrounding the inhibiting spacers 6 inside the cavity 10, also not marked.

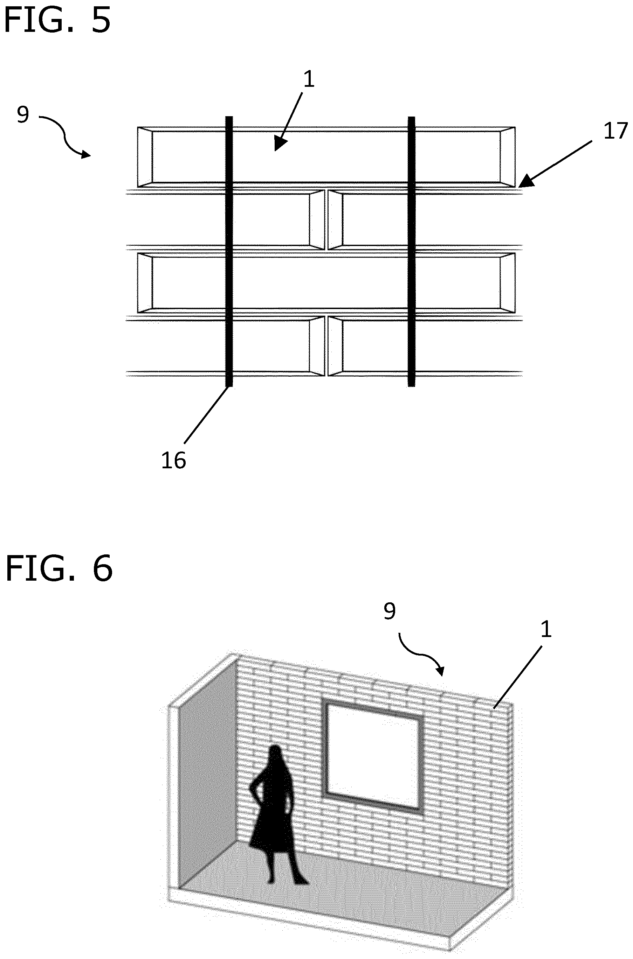

Figure 5 shows a glass wall 9 made of glass bricks 1 as shown in Figure 1. The glass bricks 1 are glued together with opaque mortar or transparent glue the glass bricks 1 are reinforced with reinforcing elements 16, preferably vertical metallic rods or ropes, which strengthen the transparent wall with respect to lateral forces. The metallic rods go through the glass bricks inside of the brick.

Figure 6 shows a perspective view on a glass wall 9 made of glass bricks 1. The glass bricks 1 are used for perimeter walls and are a substitution for conventional construction bricks made of clay, foam concrete or other loadbearing material. Transparent glass brick creates final layer from interior and exterior and does not use/allow plastering as conventional construction bricks. The glass bricks 1 are not used as a substitution for windows.

In another emobidment the translucent insulating glass brick 1 may comprise an additional low-e coating as layer on at least one of the glass panes 2, 2', 3, 3' in order to minimise infrared and UV light transmission. Such low e-coating is not depicted in the figures. The low-e coating reflects at least 90% of the incident infrared radiation, preferably at least 95% and most preferably at least 99% of the incident infrared radiation. Most preferred such low-e coating should be placed on the outside of the outer glass panes 2, 2', which are arranged on the side opposite the cavity 10, i.e. are spaced apart from the interior of the cavities 10. The current low-E coating technologies are especially silver-based low-E technologies, because of usage of at least one silver comprising low-e coating layer. Such silver thin films are often combined with additional layers, mostly metal or metal oxide layers, which is well known in the art. Low-e coatings can be characterized by their U-factor as coefficient of heat transfer, wherein the lower the U-factor, the better the thermal insulating properties of the glass panes 2, 2'. Layers with an infrared reflectivity of at least 90%, preferably of at least 95% and most preferably of at least 99% are sufficient.

### LIST OF REFERENCE NUMERALS

- 1: glass brick
- 2, 2': outer glass pane
- 3, 3': inner glass pane
- 4: translucent insulating aerogel material
- 5: sealing spacer
- 6: inhibiting spacer
- 7: blind hole
- 8: anchor
- 9: glass wall
- 10: first cavity
- 10': second cavity
- 10": third cavity
- 11: sealing layer
- 12: short side
- 13: long side
- 14: upper side
- 15: lower side
- 16: reinforcing element
- 17: mortar or glue
- 18: flat base
- 19: arch
- 20: side wall
- L base: length axis

## Claims

1. A translucent insulating glass brick (1) having two short sides (12), two long sides (13) an upper side (14) and a lower side (15), said glass brick comprising at least two glass panes (2, 2') forming the long sides (13) of the glass brick (1), with at least one spacer fixed at inner sides for spacing two adjacent glass panes (2, 2') towards each other and creating at least one cavity (10) in the interspace between the glass panes (2, 2'), in which the at least one spacer is fixed, wherein the cavity (10) is filled with an translucent insulating aerogel material (4) between the glass panes,
**characterized in that**
at least two spacers are fixed inside the cavity (10), which are formed as inhibiting spacer (6), preferably from a transparent or translucent plastic material,
comprising at least a wall in a zig-zag shape, with at least one turn between beginning and end around a base length axis (L) or
with a shape, comprising at least one base rod or plate or a multiplicity of rods and plates, which can point in different directions from a base length axis (L),
which inhibiting spacers (6) are placed in the internal space of the cavity (10) between the glass panes (2, 2') reducing thermal transfer,
and that the periphery of the glass brick (1), at least the upper (14) and lower (15) sides between the glass panes and the short sides (12) between two glass panes are sealed with a sealing layer (11) forming a closed and aerogel filled cavity (10) between the glass panes.

2. The translucent insulating glass brick (1) according to claim 1, wherein at least two sealing spacers (5) with U-shape or C-shape, comprising a flat base, essentially two parallel side walls and a third arch-shaped wall oriented to the flat base, from plastic material, are placed predominantly at the outer perimeter of the glass panes (2, 2') at the short sides of the glass brick to give additional structural stability to the brick.

3. The translucent insulating glass brick (1) according to claim 1 or 2, wherein the periphery of the glass brick (1) is completely closed with the sealing layer (11), preferably a plastic film, a plastic film with reinforcing fibers or a polycarbonate or glass layer, forming a completely closed cavity.

4. The translucent insulating glass brick (1) according to one of the preceding claims,
**characterized in that** the glass brick (1) comprises at least three glass panes with two outer glass panes (2, 2') forming the long sides (13) of the glass brick (1) and at least one inner glass pane (3) located parallel between the two outer glass panes (2, 2'), sealing spacers (5) and/or inhibiting spacers (6) for spacing two adjacent glass panes towards each other and creating cavities (10) in the interspace between two adjacent glass panes, and a translucent insulating aerogel material (4) filled in the cavities (10) between the glass panes, and that the short sides (12) between two glass panes without sealing spacers (5) and the upper (14) and lower (15) sides between the glass panes are sealed with a sealing layer (11) forming closed cavities between the glass panes.

5. The translucent insulating glass brick (1) according to one of the preceding claims, **characterized in that** glass brick (1) comprises four glass panes with a first (2) and a second (2') outer glass pane and a first (3) and a second (3') inner glass pane, wherein the sealing spacers (5) are placed between the first outer glass pane (2) and the first inner glass plane (3) forming a first cavity (10) and between the second outer glass pane (2') and the second inner glass pane (3') forming a second cavity (10'), and wherein the inhibiting spacers (6) are placed between the two inner glass panes (3, 3') forming a third cavity (10").

6. The translucent insulating glass brick (1) according to one of the preceding claims, **characterized in that** the sealing spacers (5) and/or the inhibiting spacers (6) are of plastic material, preferably of polycarbonate, acrylic or epoxy resin.

7. The translucent insulating glass brick (1) according to one of the preceding claims, **characterized in that** the sealing spacers (5) and the inhibiting spacers (6) are transparent or translucent.

8. The translucent insulating glass brick (1) according to one of the preceding claims, **characterized in that** the translucent insulating aerogel material (4) comprises aerogel granules.

9. The translucent insulating glass brick (1) according to one of the preceding claims, **characterized in that** the glass panes have blind holes (7) within which the sealing spacers (5) and the inhibiting spacers (6) which serve for anchoring the spacer with an anchor (8).

10. The translucent insulating glass brick (1) according to one of the preceding claims, **characterized in that** the glass panes are made from transparent, milky, color-tinted and/or sanded glass.

11. The translucent insulating glass brick (1) according to one of the preceding claims, **characterized in that** the glass panes comprise a laminated layer or a metal mesh.

12. The translucent insulating glass brick (1) according to one of the preceding claims, **characterized in that** the glue is comprising polycarbonate, acrylic or epoxy resin or generally polymer resin.

13. The translucent insulating glass brick (1) according to one of the preceding claims, **characterized in that** a low e-coating layer, with an infrared reflectivity of at least 90%, preferably of at least 95% and most preferably of at least 99%, is coated on at least one of the glass panes (2, 2', 3, 3') to minimise IR and UV transmission, comprising most preferred at least one silver based layer.

14. A translucent glass wall (9) comprising a multiplicity of glass bricks (1) according to one of the preceding claims, **characterized in that** the bricks (1) are connected with mortar or glue (17).

15. The glass wall (9) according to claim 10, **characterized in that** the glass wall is reinforced with at least one vertical reinforcing element (16), preferably with a metal rod or rope.
